(19) Europäisches Patentamt

European Patent Office

Office européen des brevets

(11) Veröffentlichungsnummer: **0 309 893 B1**

(12) **EUROPÄISCHE PATENTSCHRIFT**

(45) Veröffentlichungstag der Patentschrift: **19.02.92**

(21) Anmeldenummer: **88115521.2**

(22) Anmeldetag: **22.09.88**

(51) Int. Cl.⁵: **A01N 47/22**, A01N 47/12, C07C 271/16, //(A01N47/22, 47:12)

(54) **Insektizides Mittel.**

(30) Priorität: **30.09.87 CH 3810/87**

(43) Veröffentlichungstag der Anmeldung:
**05.04.89 Patentblatt 89/14**

(45) Bekanntmachung des Hinweises auf die
Patenterteilung:
**19.02.92 Patentblatt 92/08**

(84) Benannte Vertragsstaaten:
**CH DE ES FR GB IT LI**

(56) Entgegenhaltungen:
**US-A- 3 310 467**

(73) Patentinhaber: **DR. R. MAAG AG**

**CH-8157 Dielsdorf(CH)**

(72) Erfinder: **Dorn, Silvia, Dr.**
**Bohnackerstrasse 5**
**CH-8157 Dielsdorf(CH)**

(74) Vertreter: **Roth, Bernhard M. et al**
**Patentabteilung CIBA-Geigy AG, Postfach**
**CH-4002 Basel(CH)**

**Beschreibung**

Gegenstand der vorliegenden Erfindung sind insektizide Mittel. Diese sind gekennzeichnet durch einen Gehalt an

a) Aethyl-[2-(4-phenoxyphenoxy)äthyl]carbamat und

b) (2,3-Isopropylidendioxyphenyl)-methylcarbamat oder (2-Isopropoxyphenyl)-methylcarbamat oder [2-(1,3-Dioxolan-2-yl)phenyl]-methylcarbamat.

Die Komponente a) ist unter dem Namen Fenoxycarb, die Komponenten b) sind unter den Namen Bendiocarb, Propoxur und Dioxacarb bekannt geworden. Die bevorzugte Komponente b) ist (2,3-Isopropylidendioxyphenyl)-methylcarbamat (Bendiocarb).

Die erfindungsgemässen Mittel beschleunigen den insektiziden Wirkungseintritt und steigern die Wirkung gegen gemischte Populationen der verschiedensten Insektenarten. Zudem tritt in vielen Fällen Synergismus auf. Schliesslich können mit den erfindungsgemässen Mitteln Resistenzerscheinungen durchbrochen werden.

Das erfindungsgemässe Mittel ist wirksam gegen die verschiedenartigsten Schadinsekten in Häusern, Ställen, im Wasser und im Freiland, an Pflanzen und Tieren, an Vorräten und Materialien wie z.B. gegen

Fliegen und Mücken (Musca spp., Aedes Spp., Culex spp., Anopheles spp., Lucilia sericata, etc.);

Schaben (Blattella germanica, Blattella orientalis, Periplaneta americana, etc.);

Material- und Vorratsschädlinge (Tineola bisselliella, Anthrenus scropholariae, Attagenus spp., Tribolium spp., Sitophilus spp., Rhizopertha dominica, Oryzaephilus spp., Ephestia spp., Plodia spp., Sitotroga cerealella, etc.);

Ameisen (Atta spp., Acromyrmex Spp., Pogonomyrmex spp., Iridomyrmex spp., Pheidole spp., Mormonium Spp., Camponotus spp., Lasius spp., Phormica spp.. Myrmica Spp., Solenopsis Spp., Tetramorium spp., etc.);

Flöhe (Xenopsylla cheopsis, Ctenocephalides felix, etc.);

Termiten (Reticulotermes spp., Macrotermes spp., etc.).

Die Komponenten a) und b) können nach irgendeiner der für solche Verbindungen üblichen Methoden konfektioniert werden, und das Verfahren zur Herstellung des erfindungemässen Mittels besteht darin, dass man die Komponente a) mit einer Komponente b) und, falls erforderlich, mit einem inerten Tragermaterial vermischt.

Das Gewichtsverhältnis der Komponente a) zur Komponente b) liegt zweckmässigerweise im Bereich von ca. 1:0,01 bis 1:10, vorzugsweise von ca. 1:0,01 bis 1:1.

Wenn gewünscht, können die Komponenten a) und b) in einem mit Wasser nicht mischbaren Lösungsmittel, wie beispielsweise einem hochsiedenden Kohlenwasserstoff, gelöst werden, das zweckmässigerweise gelöste Emulgatoren enthält, so dass die Lösung bei Zugabe zu Wasser selbstemulgierend wirkt.

Die Komponenten können auch mit einem Netzmittel mit oder ohne inertes Verdünnungsmittel zur Bildung eines netzbaren Pulvers vermischt werden, welches in Wasser löslich oder dispergierbar ist, oder sie können mit dem inerten Verdünnungsmittel zur Bildung eines festen oder pulverförmigen Produktes vermischt werden.

Als inerte feste Verdünnungsmittel, einschliesslich pulverförmiger oder feinverteilter Feststoffe, mit welchen die Komponenten a) und b) verarbeitet werden können, kommen Kaolin, Tone, Sande, Talk, Glimmer, Düngemittel und dgl. in Frage, wobei solche Produkte entweder staubförmig sind oder als Materialien mit grösserer Teilchengrösse vorliegen können.

Die Netzmittel können anionische Verbindungen sein, wie beispielsweise Seifen; Fettsulfatester, z.B. Dodecylnatriumsulfat, Octadecylnatriumsulfat und Cetylnatriumsulfat; fettaromatische Sulfonate, z.B. Alkylbenzolsulfonate und Butylnaphthalinsulfonate; und komplexere Fettsulfonate, z.B. die Amidkondensationsprodukte von Oelsäure und N-Methyltaurin und das Natriumsulfonat von Dioctylsuccinat.

Die Netzmittel können auch nichtionische Netzmittel sein, wie beispielsweise Kondensationsprodukte von Fettsäuren, Fettalkoholen oder fettsubstituierten Phenolen mit Aethylenoxyd; Fettsäureester und -äther von Zuckern oder mehrwertigen Alkoholen; die Produkte, die aus Zuckern oder mehrwertigen Alkoholen durch Kondensation mit Aethylenoxyd erhalten werden; oder die Produkte, die als Blockcopolymere von Aethylenoxyd und Propylenoxyd bekannt sind.

Die Netzmittel können schliesslich kationische Mittel sein, wie beispielsweise Cetyltrimethylammoniumbromid und dgl..

Das erfindungsgemässe insektizide Mittel kann auch in Form eines Aerosols vorliegen, wobei zweckmässigerweise zusätzlich zum Treibgas, welches geeigneterweise ein polyhalogeniertes Alkan, wie Dichlordifluormethan, ist, ein Co-Solvens und ein Netzmittel verwendet werden.

Folgende Formulierungstypen stehen im Vordergrund: Pulver, Stäube, Granulate, Lösungen, Suspensionen, Emulsionen, emulgierbare Konzentrate, Pasten, Räuchermittel, Verneblungsmittel, Köder, Aerosole.

Die erfindungsgemässen Mittel können als formulierte Gemische der beiden Komponenten a) und b) zur Anwendung gelangen, oder aber auch aus den beiden separat formulierten Komponenten unmittelbar vor Gebrauch hergestellt werden, z.B. die beide Komponenten a) und b) als benetzbare Pulver formuliert in Wasser eingebracht werden, wobei eine Spritzbrühe entsteht.

Die Konzentration an Wirkstoffen, d.h. Komponente a) und Komponente b), in den erfindungsgemässen insektiziden Mitteln kann innerhalb weiter Bereiche, beispielsweise zwischen etwa 0,002 Gew.% und etwa 95 Gew.%, vorzugsweise zwischen etwa 0,5 und etwa 90 Gew.%, schwanken. Die Mittel können beispielsweise in einer Form vorliegen, die sich für die Lagerung und den Transport eignet. In solchen Formulierungen, z.B. Spritzpulvern, ist die Gesamtwirkstoffkonzentration normalerweise im höheren Bereich, vorzugsweise zwischen 0,25 und 95 Gewichtsprozent, insbesondere zwischen 0,25 und 80 Gew.%. Diese Formulierungen können dann z.B. mit inerten Stoffen, insbesondere mit Wasser, bis zu Wirkstoffkonzentrationen verdünnt werden, die sich für den praktischen Gebrauch eignen, also vorzugsweise ca. 0,002 bis 2 Gew.%, insbesondere ca. 0,05 - 0,6 Gew.%. Die Wirkstoffkonzentrationen können jedoch auch kleiner oder grösser sein.

In ihren verschiedenen Anwendungsgebieten können die erfindungsgemässen insektiziden Mittel in unterschiedlichen Mengenverhältnissen eingesetzt werden.

Von den erfindungsgemässen Wirkstoff-Kombinationen werden zweckmässigerweise 1-10'000 mg/m$^2$ Boden und Behandlung verwendet, vorzugsweise 10-100 g/ha Boden und Behandlung bei grossflächigen Aussenbehandlungen bzw. 10-100 mg/m$^2$ Wirkstoff (a) und 100-10'000 mg/m$^2$ Wirkstoff (b) für Spezialbehandlungen (z.B. Raumbehandlungen).

Beispiel 1 (Adultizid)

Musca domestica

Testinsekt: Musca domestica (gemeine Stubenfliege), multiresistenter Stamm.

Testmethode: Behandelte Filterstreifen werden in einen Plastikbecher gegeben. Pro Parzelle werden 10 weibliche Fliegen angesetzt. Die Wasserversorgung der Fliegen erfolgt über einen feuchten Wattepfropfen im Boden des Plastikbechers. Die Inkubation wird bei 23°C und 50% relativer Luftfeuchtigkeit durchgeführt. Testdauer: 48 Stunden. Die Wirkung wird ausgedrückt als prozentuale Reduktion der Zahl ausgewachsener Tiere, verglichen mit den Kontrollparzellen.

| Wirkstoff [Komponente a) und/oder b)] | Handelsübliche Formulierung | Dosis $10^{-x}$ g Wirkstoff/cm$^2$ x = | Wirkung (%) |
|---|---|---|---|
| b)<br>a) | WP 80%<br>WP 25% | 4<br>4 | 17<br>0 |
| b) in<br>Kombination<br>mit a) | WP 80%<br>WP 25% | 4<br>4 | 65 |
| unbehandelte Kontrollen: Mortalität 0%<br>b): (2,3-Isopropylidendioxyphenyl)-methylcarbamat<br>WP: Benetzbares Pulver | | | |

Beispiel 2 (benetzbares Pulver)

Fenoxycarb (100%)      250 g
Bendiocarb (100%)      250 g
Kieselsäure, hydratisiert (festes Verdünnungsmittel)      150 g
Natrium-Laurylsulfat (Netzmittel)      20 g
Natrium-Lignosulfonat (Dispergator)      50 g
Kaolin (festes Verdünnungsmaterial)      ad 1000 g

Herstellung:

In einem Mixer wird das geschmolzene Fenoxycarb in feinem Strahl auf die vorgelegte Kieselsäure aufgedüst, so dass ein feinpulveriges Mischgut entsteht. Unter fortlaufendem, intensivem Mischen werden anschliessend der Reihe nach Bendiocarb, Natrium-Laurylsulfat, Natrium-Lignosulfonat und Kaolin zugegeben. Diese Mischung wird in einer Luftstrahlmühle gemahlen. Das so hergestellte Spritzpulver kann zur Applikation in der gewünschten Konzentration in Wasser eingerührt werden und ergibt so eine feindisperse Spritzbrühe.

**Patentansprüche**

1. Insektizides Mittel, dadurch gekennzeichnet, dass es als Wirkstoffe

   a) Aethyl-[2-(4-phenoxyphenoxy)äthyl]carbamat und
   b) (2,3-Isopropylidendioxyphenyl)-methylcarbamat oder
   (2-Isopropoxyphenyl) methylcarbamat oder
   [2-(1,3-Dioxolan-2-yl)phenyl]-methylcarbamat

   und, falls erforderlich, inertes Trägermaterial enthält.

2. Insektizides Mittel nach Anspruch 1, dadurch gekennzeichnet, dass es als Komponente b) (2,3-Isopropylidendioxyphenyl)-methylcarbamat enthält.

3. Insektizides Mittel nach Anspruch 1 oder 2, dadurch gekennzeichnet, dass das Gewichtsverhältnis der Komponente a) zur Komponente b) im Bereich von ca. 1:0,01 bis 1:10 liegt.

4. Insektizides Mittel nach Anspruch 3, dadurch gekennzeichnet, dass das Gewichtsverhältnis im Bereich von ca. 1:0,01 bis 1:1 liegt.

5. Verfahren zur Herstellung eines insektiziden Mittels gemäss einem der Ansprüche 1 bis 4, dadurch gekennzeichnet, dass man die Komponente a) mit einer Komponente b) und, falls erforderlich, mit inertem Trägermaterial vermischt.

6. Verfahren nach Anspruch 5, dadurch gekennzeichnet, dass man als Komponente b) (2,3-Isopropylidendioxyphenyl)-methylcarbamat verwendet.

7. Verfahren nach Anspruch 5 oder 6, dadurch gekennzeichnet, dass man die Komponenten a) und b) in einem Gewichtsverhältnis gemäss Anspruch 3 oder 4 vermischt.

8. Verfahren zur Bekämpfung von Schadinsekten, dadurch gekennzeichnet, dass man die zu schützenden Gegenstände oder die Insekten selbst mit einer wirksamen Menge eines in einem der Ansprüche 1 bis 4 genannten insektiziden Mittels behandelt.

9. Verwendung eines in einem der Ansprüche 1 bis 4 genannten Mittels zur Bekämpfung von Schadinsekten.

**Claims**

1. An insecticidal composition, which contains as active substances

   a) ethyl 2-(4-phenoxyphenoxy)ethylcarbamate and
   b) 2,3-isopropylidenedioxyphenyl methylcarbamate or
   2-isopropoxyphenyl methylcarbamate or
   2-(1,3-dioxolan-2-yl)phenyl methylcarbamate

   and, where required, inert carrier material.

2. An insecticidal composition according to claim 1, which contains 2,3-isopropylidenedioxyphenyl methylcarbamate as component b).

3. An insecticidal composition according to claim 1 or 2, wherein the weight ratio of component a) to component b) lies in the range of about 1:0.01 to 1:10.

4. An insecticidal composition according to claim 3, wherein the weight ratio lies in the range of about 1:0.01 to 1:1.

5. A process for the production of an insecticidal composition in accordance with any one of claims 1 to 4, which comprises mixing component a) with component b) and, where required, with inert carrier material.

6. A process according to claim 5, wherein 2,3-isopropylidene-dioxyphenyl methylcarbamate is used as component b).

7. A process according to claim 5 or 6, wherein components a) and b) are mixed in a weight ratio in accordance with claim 3 or 4.

8. A method for the control of harmful insects, which comprises treating the articles to be protected or the insects themselves with an effective amount of an insecticidal composition set forth in any one of claims 1 to 4.

9. The use of a composition set forth in any one of claims 1 to 4 for the control of harmful insects.

**Revendications**

1. Agent insecticide, caractérisé en ce qu'il contient code matières actives
   a) éthyl-[2-(4-phénoxyphénoxy)éthyl]carbamate et
   b) (2,3-isopropylidènedioxyphényl)-méthylcarbamate, ou
   (2-isopropoxyphényl)-méthylcarbamate ou
   [2-(1,3-dioxolan-2-yl)phényl]-méthylcarbamate
   et, si nécessaire un support inerte.

2. Agent insecticide selon la revendication 1, caractérisé en ce qu'il contient comme composant b) le (2,3-isopropylidène-dioxyphényl)-méthylcarbamate.

3. Agent insecticide selon la revendication 1 ou 2, caractérisé en ce que le rapport pondéral du composant a) au composant b) se situe dans un intervalle d'environ 1:0,01 à 1:10.

4. Agent insecticide selon la revendication 3, caractérisé en ce que le rapport pondéral se situe dans un intervalle d'environ 1:0,01 à 1:1.

5. Procédé de préparation d'un agent insecticide selon l'une des revendications 1 à 4, caractérisé en ce qu'on mélange le composant a) avec un composant b) et, si nécessaire, avec un support inerte.

6. Procédé selon la revendication 5, caractérisé en ce qu'on utilise comme composant b) le (2,3-isopropylidènedioxyphényl)-méthylcarbamate.

7. Procédé selon la revendication 5 ou 6, caractérisé en ce qu'on mélange les composants a) et b) dans un rapport pondéral selon la revendication 3 ou 4.

8. Procédé de lutte contre les insectes nuisibles, caractérisé en ce qu'on traite les objets à protéger ou les insectes eux-mêmes avec une quantité efficace d'un agent insecticide mentionné dans les revendications 1 à 4.

9. Application d'un agent mentionné dans l'une des revendications 1 à 4 pour combattre les insectes nuisibles.